# EUROPÄISCHE PATENTANMELDUNG

(11) **EP 2 703 150 A1**
(43) Veröffentlichungstag der Anmeldung: **05.03.2014**
(21) Anmeldenummer: 13179594.0
(22) Anmeldetag: 07.08.2013
(51) Int. Cl.: B29C 70/54, B29C 70/22, B29C 70/44

(54) **Verfahren und Vorrichtung zum Einlegen von Gelegen aus Rovings in eine Presse**

(30) Priorität: 04.09.2012 DE 102012215688
(71) Anmelder: Robert Bürkle GmbH, 72250 Freudenstadt (DE)
(72) Erfinder: Brümmerstädt, Martin, 72275 Alpirsbach (DE)
(74) Vertreter: Lemcke, Brommer & Partner

(57) **Zusammenfassung**

Die Erfindung betrifft ein Verfahren zum Einlegen von Gelegen aus Rovings 2 in eine Presse, in der Faserverbundwerkstoff-Bauteile hergestellt werden, wobei das Gelege von einem Abnahmewerkzeug 11, 12, 13 aufgenommen, über ein Pressenunterteil 14 bewegt und dort abgelegt wird. Das Ablegen des Geleges auf dem Pressenunterteil 14 erfolgt mit Hilfe einer am Abnahmewerkzeug angebrachten elastischen Membran 12. Die Erfindung betrifft weiterhin ein solches Abmahmewerkzeug.

## Beschreibung

Die Erfindung betrifft ein Verfahren zum Einlegen von Gelegen aus Rovings in eine Presse, in der Faserverbundwerkstoff-Bauteile hergestellt werden, nach dem Oberbegriff des Anspruchs 1, sowie ein Abnahmewerkzeug zur Durchführung eines solchen Verfahrens.

Rovings sind Bündel von endlosen Fasern bzw. Filamenten, die zur Fertigung von Faserverbundwerkstoffen verwendet werden. Hierbei kommen Einzelfilamente aus Glas, Keramik, Aramid und dergleichen zum Einsatz, insbesondere jedoch Carbonfasern bzw. Kohlenstofffasern. Rovings aus Carbonfasern bestehen aus bis zu mehreren tausend Filamenten und werden oft in Bandform verarbeitet. Im Rahmen der vorliegenden Erfindung werden auch solche Rovingbänder, die streng genommen aus mehreren zusammengeführten Rovings bestehen, sowie Bündel aus Rovings oder aus Roving-Bändern als "Roving" bezeichnet.

Um aus Rovings Faserverbundwerkstoff-Bauteile zu fertigen, müssen die Rovings zunächst zu einem Gelege, das aus mindestens einer Gelegeschicht besteht, gelegt werden. Ein Faserverbundwerkstoff besteht im Wesentlichen aus zwei Hauptkomponenten, den Rovings und einer diese einbettenden Matrix. Ein Hauptanwendungsgebiet der vorliegenden Erfindung ist bei der Herstellung von mit Carbonfasern verstärkten Kunststoffen (CFK) gegeben, die aufgrund ihrer Belastbarkeit und ihres geringen Gewichts zunehmend Werkstoffe aus Stahl oder Aluminium ersetzen, insbesondere im Fahrzeugbau, jedoch auch bei stationären technischen Anwendungen mit bewegten Teilen, wie beispielsweise Windkraftanlagen. Hier werden neben den Carbonfasern, die in der Regel aus Polyacrylnitril als Ausgangsstoff hergestellt wurden und zu ca. 95 % aus reinem Kohlenstoff bestehen, als Matrix Epoxidharze und Thermoplaste verwendet.

Die Festigkeitseigenschaften von Faserverbundwerkstoffen sind entscheidend von der Orientierung der darin verlaufenden Rovings abhängig. Denn die in der Matrix eingebetteten Rovings sind hoch zugfest, so dass sich bei einer Einbettung von Rovings in beispielsweise nur einer Raumrichtung eine unidirektionale Festigkeit des Faserverbund-Bauteils ergibt. Die mechanischen Eigenschaften quer zur Faserrichtung der Rovings sind zumeist schlecht. Um Faserverbund-werkstoff-Bauteile mit sinnvollen Eigenschaften zu fertigen, werden die Rovings daher meist so gelegt, dass sie in mindestens zwei Raumrichtungen orientiert verlaufen. Insbesondere zur maschinellen Herstellung von mit Carbonfasern verstärkten Kunststoffen (CFK) werden die Rovings üblicherweise gewebt oder gewirkt, so dass sie als flächige Gelegeschicht zum Einbetten in die Matrix vorliegen, wobei die Rovings in dieser Gelegeschicht senkrecht zueinander orientiert sind. Ein Beispiel für ein entsprechendes Verfahren findet sich in der DE 100 05 202 A1. Ein alternatives Herstellverfahren für Faserverbundwerkstoffe ist die Faserspritztechnik, bei der kurze Rovingstücke in statistisch verteilten Raumrichtungen in die Matrix eingebettet werden. Die Festigkeit solcher Faserverbundwerkstoffe ist jedoch nicht optimal, da die Eigenschaften der Rovings durch das Zerschneiden stark verschlechtert werden.

Gerade im Fahrzeugbau ist es allerdings wünschenswert, dreidimensional geformte Bauteile aus CFK-Werkstoff herzustellen. Darüber hinaus müssen diese Bauteile oftmals ganz spezielle Festigkeitsanforderungen erfüllen, so dass die Orientierung der in der Matrix eingebetteten Rovings entsprechend verlaufen sollte. Gewebte oder gewirkte Gelege sind hier oft nicht optimal. Ein Faserverbundwerkstoff, der in Faserspritztechnik hergestellt wurde, kann die entsprechenden Anforderungen naturgemäß noch weniger erfüllen. Bei Luftfahrzeugen sowie bei Fahrrädern und im Motorsport werden daher Faserverbundwerkstoff-Bauteile, insbesondere aus CFK, eingesetzt, zu deren Herstellung die Rovings von Hand gelegt werden. Die Orientierung der Rovings kann so optimal ausgestaltet werden, jedoch ist eine solche Fertigung von Hand naturgemäß sehr kostenintensiv. Eine Großserienfertigung, insbesondere im Kraftfahrzeugbau ist mit handgelegten Rovings nicht möglich.

Um Rovings in gewünschter Dichte und Ausrichtung, die von den gewünschten mechanischen Eigenschaften des fertigen Bauteils abhängen, automatisiert zu einem Gelege zu legen, ist es im Stand der Technik bekannt, mindestens ein Roving über eine Anzahl von Stiftelementen zu führen, an denen das Roving jeweils umgelenkt wird, um eine flächige, möglichst multiaxiale Gelegeschicht zu bilden. Unter Stiftelementen ist hier, und generell im Rahmen der vorliegenden Erfindung jedes Element zu verstehen, um das ein Roving umgelenkt werden kann; es muss sich also nicht um Stifte im Wortsinne handeln. Beispiele für ein Verfahren zum automatisierten Legen von Rovings über eine Anzahl von Stiftelementen sind in der EP-A-0 591 822 und der EP-A-0 110 698 zu finden.

Das als Halbzeug dienende Gelege aus Rovings muss schließlich, um das erwünschte Faserverbundwerkstoff-Bauteil herstellen zu können, in die Matrix eingebettet werden. Die vorliegende Erfindung geht hierbei von einem Stand der Technik aus, bei dem das Gelege aus Rovings sowie Ausgangsmaterial für die Matrix in eine Laminierpresse eingebracht werden, wo das Ausgangsmaterial für die Matrix unter Druck und Wärme aufgeschmolzen bzw. aktiviert und der Verbund mit den Rovings hergestellt wird. Das Ausgangsmaterial für die Matrix kann hierbei innerhalb oder außerhalb der Presse auf das Gelege oder zwischen mehrere Gelegeschichten aufgestreut oder in Form einer Folie aufgelegt werden; es ist jedoch auch möglich, Rovings zu verwenden, die bereits mit Matrixmaterial getränkt sind.

Das Herstellen des Faserverbundwerkstoff-Bauteils in einer Laminierpresse bietet den großen Vorteil, dass verschiedenste dreidimensionale Bauteilformen hergestellt werden können. Beispielsweise kann das Pressenunterteil, auf das das Gelege und das Matrixmaterial aufgelegt werden, eine Negativform der gewünschten Bauteiloberfläche bilden, an die sich das Gelege beim Pressen anschmiegt. Das Pressenoberteil kann eine elastische Pressenmembran als Andrückelement enthalten, die sich dann durch Einleiten eines Druckfluids in einen oberhalb der Pressenmembran befindlichen Druckraum und/oder durch Evakuieren des Raums zwischen dem Pressenunterteil und der Pressenmembran ihrerseits an das Gelege anschmiegt und dieses in die Form des Pressenunterteils presst. Membranpressen zum Laminieren von Bauteilen sind an sich bekannt und beispielsweise zum Herstellen von Möbelteilen aus Holzwerkstoff oder von Photovoltaikmodulen marktüblich.

Problematisch ist bei einem Verfahren der vorliegenden Art das Einlegen des Geleges in die Presse bzw. das Auflegen desselben auf das Pressenunterteil. Dies kann gegebenenfalls auch außerhalb der eigentlichen Presse erfolgen. Denn als "Pressenunterteil" im Sinne der vorliegenden Erfindung ist jedes Teil zu verstehen, gegen das das Gelege bzw. das Ausgangsmaterial für das herzustellende Bauteil von der Membran gedrückt wird. Es kann sich also auch um eine Form handeln, die auf ein Tablett aufgelegt und mit diesem in die Presse eingebracht wird, und dergleichen mehr. Wichtig ist nur, dass das "Pressenunterteil" beim eigentlichen Pressvorgang das Gegenlager für die Pressenmembran bildet.

Wenn das Gelege nicht auf dem Pressenunterteil selbst gelegt wurde (was nur händisch oder roboterunterstützt möglich ist, wie dies beispielsweise in der DE 10 2010 015 199 A1 vorgeschlagen wurde) ist es sehr schwierig, das Gelege von demjenigen Ort, an dem das Roving gelegt wurde, zum Pressenunterteil zu bringen und auf dieses aufzulegen, ohne dass einzelne Rovingabschnitte verrutschen und insbesondere unbeabsichtigte Lücken entstehen oder Rovingabschnitte unbeabsichtigt übereinander zu liegen kommen, was aufgrund der dadurch entstehenden Krümmungen deren Zugfestigkeit beeinträchtigen kann. Soweit die Oberfläche des Pressenunterteils nicht eben, sondern dreidimensional geformt ist, wird das Problem des unbeabsichtigten Verrutschens von einzelnen Rovingabschnitten noch verschärft.

Der vorliegenden Erfindung liegt daher die Aufgabe zugrunde, ein Verfahren und ein Abnahmewerkzeug der eingangs genannten Art vorzuschlagen, mit dem das Einlegen eines Geleges aus Rovings in eine Presse ohne Qualitätseinbußen automatisiert erfolgen kann.

Gelöst ist diese Aufgabe durch ein Verfahren mit den Merkmalen des Anspruchs 1 sowie durch ein Abnahmewerkzeug mit den Merkmalen des Anspruchs 10. Bevorzugte Ausgestaltungen des erfindungsgemäßen Verfahrens finden sich in den Ansprüchen 2 bis 9; vorteilhafte Weiterbildungen des erfindungsgemäßen Abnahmewerkzeugs sind in den Ansprüchen 11 und 12 niedergelegt.

Gemäß der vorliegenden Erfindung wird das Gelege also von einem Abnahmewerkzeug aufgenommen, an dem eine elastische Membran angebracht ist, mit deren Hilfe das Gelege auf dem Pressenunterteil abgelegt wird. Die elastische Membran kann sich auch einem dreidimensionalen Pressenunterteil flexibel anpassen und so das Gelege aus Rovings auf dem Pressenunterteil ablegen, ohne ein Verrutschen der Rovings befürchten zu müssen.

Die Membran kann beim Ablegen des Geleges über das Pressenunterteil gespannt werden; im Rahmen der vorliegenden Erfindung ist es jedoch bevorzugt, wenn die Membran Teil eines Druckraums ist, in den ein Druckfluid eingeleitet werden kann, so dass die Membran das Gelege in ähnlicher Weise wie später die Pressenmembran der Laminierpresse gegen das Pressenunterteil drückt. Vorzugsweise geschieht dies so, dass sich das Gelege ganzflächig an das Pressenunterteil anschmiegt und sich insbesondere hierbei an eine dreidimensionale Oberflächenformung anpasst.

Mit einem erfindungsgemäßen Abnahmewerkzeug können Gelege unterschiedlichster Art auf dem Pressenunterteil einer Presse zum Herstellen von Faserverbundwerkstoff-Bauteilen abgelegt werden, insbesondere auch herkömmliche Matten aus miteinander verwebten oder verwirkten Rovings. Mit der erfindungsgemäßen Membran können solche Matten insbesondere an eine dreidimensionale Oberflächenform des Pressenunterteils angeschmiegt werden.

Ganz besondere Vorteile bietet die Erfindung jedoch, wenn ein Gelege aus Rovings auf dem Pressenunterteil abgelegt werden muss, das aus einem oder mehreren Rovings gebildet wird, die zwischen einer Anzahl von Stiftelementen aufgespannt ist bzw. sind. In diesem Fall ist es im Rahmen der vorliegenden Erfindung bevorzugt, wenn das Abnahmewerkzeug eine Anzahl von Abnahmestiften aufweist, um das Gelege von den Stiftelementen abzunehmen und auf den Abnahmestiften aufgespannt bis zum Pressenunterteil zu transportieren. Es ist jedoch auch möglich, das Gelege mitsamt den Stiftelementen, auf denen es abgelegt ist, mit dem Abnahmewerkzeug mitzunehmen und das Gelege dann mittels der elastischen Membran auf dem Pressenunterteil abzulegen. Hierbei können auch die Abnahmestifte des Abnahmewerkzeugs die Stiftelemente zum Aufspannen der Rovings bzw. des Geleges bilden. Die Rovings werden in diesem Fall direkt auf dem Abnahmewerkzeug zu einem Gelege aufgespannt.

Hierbei ist es vorteilhaft, wenn das auf den Abnahmestiften des Abnahmewerkzeugs aufgespannte Gelege mittels der Membran gespannt gehalten wird, die Membran also beispielsweise mittig gegen das Gelege drückt, um die Spannung der Rovingabschnitte aufrecht zu erhalten und ein Abrutschen derselben von den Abnahmestiften zu verhindern.

Nach einer bevorzugten Weiterbildung der vorliegenden Erfindung wird das Gelege durch Aufspannen mindestens eines Rovings auf eine Anzahl von relativ zueinander beweglichen Stiftelementen gelegt. Diese Stiftelemente können einzeln relativ zueinander beweglich sein, bevorzugt ist es jedoch, wenn sich die Stiftelemente in eine erste Gruppe und eine zweite Gruppe aufteilen, welche beiden Gruppen in einer kämmenden Bewegung relativ zueinander bewegt werden können. Die in diesem Fall bevorzugt vorhandenen Abnahmestifte des Abnahmewerkzeugs greifen dann jeweils dort in das Gelege ein, wo das Roving um die Stiftelemente umgelenkt wird. Die Stiftelemente werden dann relativ zueinander bewegt, insbesondere in einer kämmenden Bewegung zweier Stiftelementgruppen, so dass das Roving, welches das Gelege bildet, an sich entspannt wird. Hierdurch übernehmen jedoch die Abnahmestifte die das Roving umlenkende Eigenschaft, so dass im Ergebnis das Gelege auf den Abnahmestiften des Abnahmewerkzeugs aufgespannt ist. Die erfindungsgemäß vorhandene Membran kann hier unterstützend wirken und die Spannung der Rovingabschnitte aufrechterhalten, ohne dass die Abnahmestifte gegeneinander beweglich sein müssen.

Beim Auflegen des Geleges auf das Pressenunterteil kann dieses von den Abnahmestiften abgestreift werden, insbesondere mit Hilfe der Membran; vorzugsweise ist jedoch vorgesehen, dass das Gelege von den Abnahmestiften abgeschnitten wird. Dies erfolgt zweckmäßig so, dass der Schnitt der Kontur des Pressenunterteils folgt, so dass die Rovings nicht über das fertige Bauteil überstehen.

Soweit das Pressenunterteil dreidimensional geformt ist, und das Gelege mittels der erfindungsgemäßen Membran an diese Form angeschmiegt wird, ist es vorteilhaft, wenn die Abnahmestifte, beispielsweise federbelastet, nachgeben können, wenn die Rovings beispielsweise in eine Vertiefung des Pressenunterteils hineingedrückt werden. Hierdurch wird ermöglicht, dass das Gelege auf den Abnahmestiften aufgespannt verbleiben kann, bis die Membran das Gelege ganzflächig auf das Pressenunterteil aufgelegt hat. Die Rovings werden in diesem Fall immer unter einer gewissen Spannung gehalten, bis sie zwischen der Membran und dem Pressenunterteil fixiert sind. Danach kann dann das Roving bzw. das Gelege von den Abnahmestiften abgeschnitten werden.

Wenn die Abnahmestifte des Abnahmewerkzeugs so positioniert sind, dass sie die Kontur des Pressenunterteils nachbilden, fällt vorteilhaft wenig oder gar kein Schneidabfall an. Besondere Vorteile hat dies im Zusammenhang mit einem vorherigen Aufspannen des Geleges auf bewegliche Stiftelemente, die ihrerseits in etwa entlang der Kontur des herzustellenden Faserverbundwerkstoff-Bauteils angeordnet sind.

Ein Ausführungsbeispiel für ein erfindungsgemäßes Verfahren, bei dem ein erfindungsgemäß ausgestaltetes Abnahmewerkzeug verwendet wird, ist im Folgenden anhand der beigefügten Zeichnungen näher beschrieben und erläutert. Es zeigen:
- Figur 1: eine schematische Draufsicht auf eine Kämmvorrichtung;
- Figur 2: eine schematische perspektivische Ansicht der Kämmvorrichtung aus Figur 1, nach dem Aufspannen ;
- Figur 3: eine schematische Draufsicht auf eine modifizierte Kämmvorrichtung, ebenfalls nach dem Aufspannen;
- Figur 4: ein Abnahmewerkzeug zum Abnehmen der Rovings aus der Kämmvorrichtung;
- Figur 5: das Auflegen der abgenommenen Rovings auf ein Pressenunterteil.

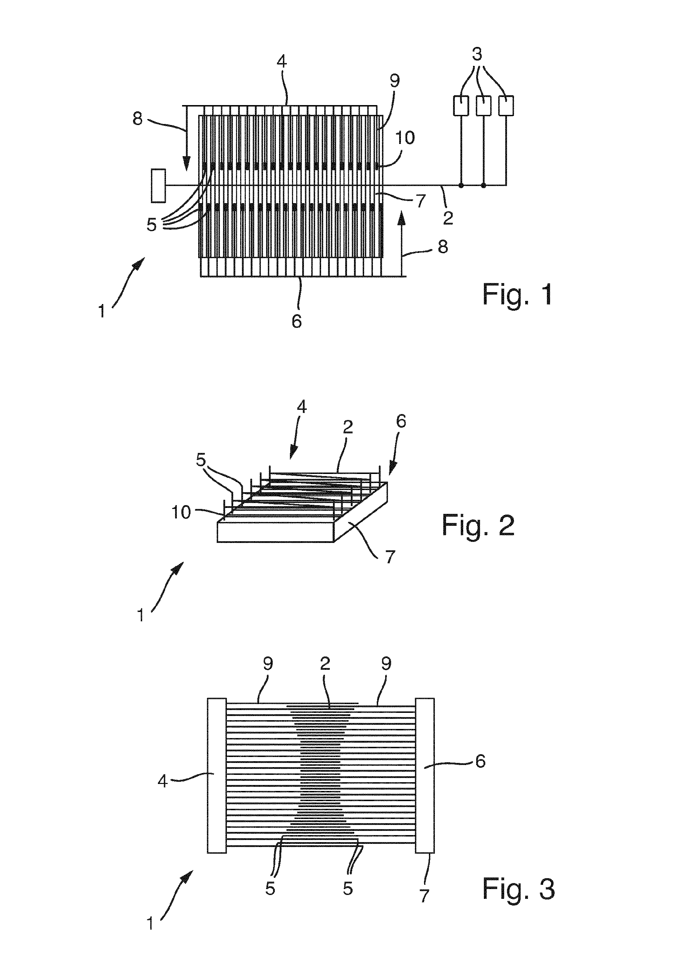

In Figur 1 ist schematisch eine Draufsicht auf eine Kämmvorrichtung 1 für ein Roving 2 dargestellt. Dieses Roving ist streng genommen ein Rovingbündel, das aus drei Spulen 3 zusammengesetzt wird, wobei jede einzelne Spule 3 jeweils ein Band mehrerer parallel verlaufender Rovings enthält. Im vorliegenden Ausführungsbeispiel ist "das Roving 2" also streng genommen ein Bündel aus mehreren Rovingbändern.

Die Kämmvorrichtung 1 besteht aus einer ersten Gruppe 4 von Stiftelementen 5 und einer zweiten Gruppe 6 von Stiftelementen 5, die beide beweglich auf einem Rahmen 7 angeordnet sind. In der in Figur 1 dargestellten Position sind die Stiftelemente 5 kämmend ineinandergreifend gegeneinander verfahrbar, und sie geben in ihrer Ausgangsposition zwischen sich einen Bereich frei, in den das Roving 2 gelegt wird. Das Roving 2 ist also zwischen den Stiftelementen 5 bzw. zwischen der ersten Gruppe 4 und der zweiten Gruppe 6 von Stiftelementen 5 hindurchgeführt.

Mit den Pfeilen 8 sind die Bewegungsrichtungen der ersten 4 und zweiten Gruppe 6 von Stiftelementen 5 symbolisiert, in denen sich die beiden Gruppen 4, 6 bewegen müssen, um das Roving 2 mittels einer kämmenden Bewegung der Stiftelemente 5 zwischen sich aufzuspannen. Das Ergebnis ist in Figur 2, einer schematischen perspektivischen Ansicht, dargestellt: Die Stiftelemente 5 der ersten Gruppe 4 und die Stiftelemente 5 der zweiten Gruppe 6 sind in einer kämmenden Bewegung gegeneinander verfahren worden und haben hierbei das zwischen ihnen hindurchgeführte Roving 2 zwischen sich aufgespannt. Dieses Roving 2 führt nun ein einer Zickzacklinie zwischen den einzelnen Stiftelementen 5 hindurch und wird an jedem Stiftelement 5 umgelenkt, so dass es eine flächige Gelegeschicht aus im Wesentlichen gleich orientierten Rovings bildet.

Wie anhand der Figuren 1 und 2 unmittelbar einleuchtet, genügt bei diesem Ausführungsbeispiel einer erfindungsgemäßen Vorrichtung eine Bewegung der beiden Gruppen 4, 6 von Stiftelementen 5, um das Roving 2 zu einer ersten flächigen Gelegeschicht zu legen. Ein aufwändiges Herumführen des Rovings 2 um die vielen Stiftelemente 5 herum, das händisch oder mittels eines Roboters erfolgen müsste, entfällt hierdurch.

Im Rahmen der vorliegenden Erfindung können die Stiftelemente 5 selbstverständlich auch völlig anders angeordnet und in verschiedene Richtungen bewegbar sein. Ebenso ist es möglich, die Stiftelemente 5 nicht gruppenweise, sondern individuell zu bewegen.

Figur 3 zeigt eine Modifikation des in Figur 2 grundsätzlich gezeigten Aufspannens des Rovings 2 auf einer Kämmvorrichtung 1: Hier werden die Stiftelemente 5 nur bis zu einer individuellen Endposition gefahren, so dass die beim Aufspannen des Rovings 2 letztendlich entstehende Gelegeschicht eine Kontur erhält, die in etwa der Kontur des herzustellenden Bauteils entspricht. Wenn diese Gelegeschicht vom Rahmen 7 abgenommen wird, entsteht demnach kein oder kaum Schneidabfall, da die Gelegeschicht der Kontur des herzustellenden Bauteils nicht mehr nachträglich angepasst werden muss.

Die in den Figuren 1 bis 3 dargestellten Stiftelemente bestehen jeweils aus Stiftträgern 9 und darauf angeordneten Stiften 10, um die herum das Roving 2 umgelenkt wird. Mittels der Stifträger 9 sind die Stifte 10 zum Aufspannen des Rovings 2 bewegbar. Die Stifte 10 sind mit (hier nicht dargestellten) konischen Umlenkflächen versehen, die drehbar gelagert auf den Stiften 10 sitzen und somit in etwa fingerhutförmig ausgestaltet sind. Die Lagerung ermöglicht eine vorteilhaft geringe Reibung zwischen dem Roving 2 und dem Stift 10, während die konische Fläche die Orientierung des als Band vorliegenden Rovings 2 beibehält.

An dieser Stelle darf festgehalten werden, dass die Stiftelemente im Rahmen der vorliegenden Erfindung auch anders ausgestaltet sein können, insbesondere als massive Träger. Wichtig ist nur, dass die Stiftelemente so gegeneinander bewegbar sind, dass sie das zwischen ihnen hindurchgeführte Roving hierbei zwischen sich aufspannen können.

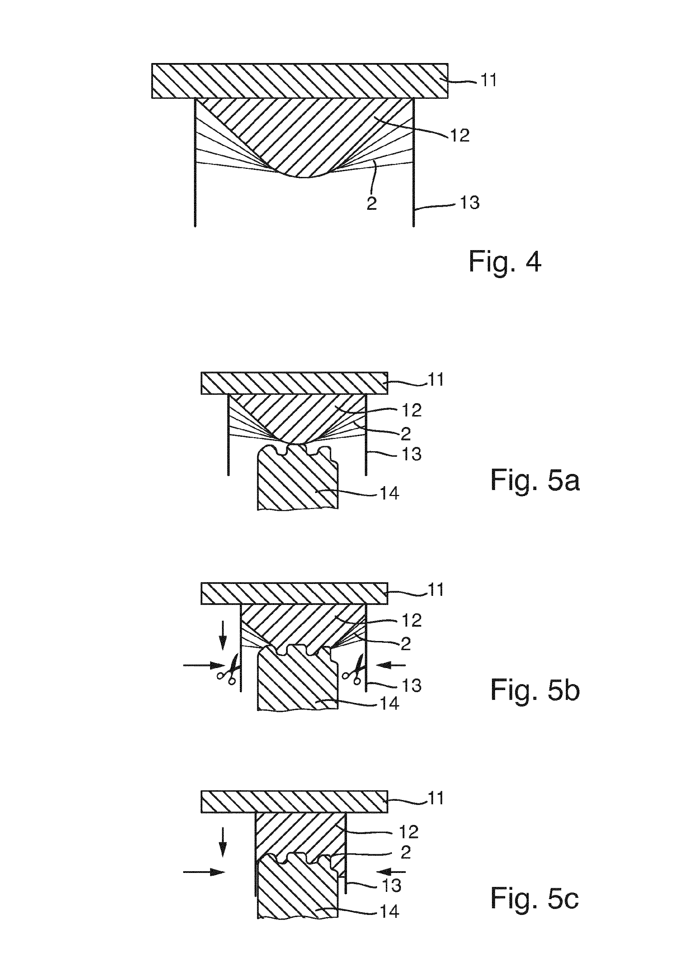

In Figur 4 ist ein einer schematischen seitlichen Schnittdarstellung ein Abnahmewerkzeug gezeigt, mit dem die auf dem Rahmen 7 aufgespannte Gelegeschicht von der Kämmvorrichtung 1 abgenommen werden kann. Es handelt sich um einen Membranrahmen 11 mit einer Membran 12, die durch Druckeinleitung in den Membranrahmen 11 wie ein Ballon aufgeblasen werden kann. Der Membranrahmen 11 wird auf die Kämmvorrichtung 1 abgesenkt bzw. auf diese aufgelegt, wobei eine Anzahl von Abnahmestiften 13 so angeordnet sind, wie die Stiftelemente 5 der Kämmvorrichtung 1. Das Roving 2 wird nach dem Absenken des Membranrahmens 11 durch eine Bewegung der beiden Gruppen 4, 6 5 von Stiftelementen 5 zueinander auf die Abnahmestifte 13 abgestreift, und die Membran 12 wird aufgeblasen, so dass sie die Roving-Gelegeschicht in ihrer Lage fixiert.

Auf diese Weise wird die Gelegeschicht, wie in Figur 5 gezeigt, dann auf ein Pressenunterteil 14 übertragen und dort abgelegt, wobei das Pressenunterteil 14 eben diese dreidimensionale Oberfläche aufweist, die später das herzustellende Faserverbundwerkstoff-Bauteil aufweisen soll. Das hier dargestellte Pressenunterteil 14 ist streng genommen lediglich eine Negativform des herzustellenden Bauteils, das außerhalb der eigentlichen Presse steht und dort mit dem Gelege und dem Matrixmaterial versehen werden kann. Danach wird diese Form in die eigentliche Presse eingebracht, wo sie dann beim Pressvorgang aus Sicht des zu formenden Bauteils die Pressenunterseite bildet, gegen die das Bauteil von der Pressenmembran gedrückt wird.

Wie bereits oben erwähnt, kann das Abnahmewerkzeug im Rahmen der vorliegenden Erfindung auch gleichzeitig als Kämmvorrichtung fungierten. Dies würde konstruktiv etwa so aussehen, dass die in den Figuren 1 bis 3 dargestellte Kämmvorrichtung 1 zusätzlich mit einer Membran 12 versehen wird, mittels der die auf der Kämmvorrichtung 1 aufgespannten Rovings 2 auf dem Pressenunterteil 14 abgelegt werden.

Wie in Figur 5 in drei aufeinanderfolgenden Verfahrensabschnitten a, b und c dargestellt ist, wird die Membran 12 mit dem Membranrahmen 11 und dem Gelege aus Rovings 2 auf das Pressenunterteil 14 abgesenkt, wobei sich die Membran 12 an die Kontur des Pressenunterteils 14 zunächst mittig anschmiegt und die Rovings 2 dort fixiert (a). Die Membran 12 wird sodann weiter aufgeblasen oder weiter abgesenkt, so dass sich das Gelege aus Rovings 2 in zwei hier erkennbare Vertiefungen hineindrückt (b). Hierdurch werden die Abnahmestifte 13 zur Mitte bzw. zum Pressenunterteil hin gezogen, was im vorliegenden Ausführungsbeispiel möglich ist, da die Abnahmestifte 13 federbelastet beweglich im Membranrahmen 11 sitzen. Nach einem Abschneiden der Rovings 2 von den Abnahmestiften 13 des Abnahmewerkzeugs (b) wird die Membran 12 noch weiter aufgeblasen, so dass sie sich komplett an das Pressenunterteil anschmiegt und die erste Gelegeschicht aus Rovings 2 in der gewünschten dreidimensionalen Form dort ablegt (c).

Ein Wiederholen des Aufspannens einer Gelegeschicht, des Abnehmens derselben und des Auflegens auf das Pressenunterteil 14 in gegebenenfalls verschiedener Orientierung lässt dann mehrere Gelegeschichten in der gewünschten dreidimensionalen Form übereinander entstehen, die dann bereits im Pressenunterteil 14 liegt. Beispielsweise nach Aufstreuen eines Matrixmaterials kann danach in einer Laminierpresse das fertige Faserverbundwerkstoff-Bauteil unter Hitze- und Druckeinwirkung automatisiert hergestellt werden.

Insbesondere wenn mehrere Gelegeschichten auf dem Pressenunterteil 14 abgelegt werden, ist es vorteilhaft, wenn die einzelnen Gelegeschichten mittels eines Adhäsivstoffs, mittels Vakuum, mittels elektrostatischer Kräfte oder dergleichen provisorisch auf dem Pressenunterteil 14 fixiert werden.

## Patentansprüche

1. Verfahren zum Einlegen von Gelegen aus Rovings (2) in eine Presse, in der Faserverbundwerkstoff-Bauteile hergestellt werden, wobei das Gelege von einem Abnahmewerkzeug (11, 12, 13) aufgenommen, über ein Pressenunterteil (14) bewegt und dort abgelegt wird,
**dadurch gekennzeichnet,**
**dass** das Ablegen des Geleges auf dem Pressenunterteil (14) mit Hilfe einer am Abnahmewerkzeug angebrachten elastischen Membran (12) erfolgt.

2. Verfahren nach Anspruch 1 ,
**dadurch gekennzeichnet,**
**dass** ein Druckfluid in einen wenigstens zum Teil von der Membran (12) begrenzten Druckraum eingeleitet wird, so dass die Membran (12) das Gelege gegen das Pressenunterteil (14) drückt.

3. Verfahren nach Anspruch 2,
**dadurch gekennzeichnet,**
**dass** die Membran (12) das Gelege ganzflächig an das Pressenunterteil (14) anschmiegt.

4. Verfahren nach Anspruch 3,
**dadurch gekennzeichnet,**
**dass** das Gelege auf dem Pressenunterteil (14) fixiert wird.

5. Verfahren nach mindestens einem der Ansprüche 1 bis 4,
**dadurch gekennzeichnet,**
**dass** das Gelege durch Aufspannen mindestens eines Rovings (2) auf eine Anzahl von relativ zueinander beweglichen Stiftelementen (5) gelegt wird, und dass das solcherart aufgespannte Gelege mittels Abnahmestiften (13) des Abnahmewerkzeugs von den Stiftelementen (5) abgenommen wird, indem die Abnahmestifte (13) dort in das Gelege eingreifen, wo das Roving (2) um die Stiftelemente (5) umgelenkt wird, und dann die Stiftelemente (5) bewegt werden, so dass das Roving (2) danach auf den Abnahmestiften (13) des Abnahmewerkzeugs aufgespannt ist.

6. Verfahren nach Anspruch 5,
**dadurch gekennzeichnet,**
**dass** das Gelege durch Aufspannen mindestens eines Rovings (2) auf eine Anzahl von relativ zueinander beweglichen Stiftelementen (5) gelegt wird, die eine erste Gruppe (4) von Stiftelementen (5) und eine zweite Gruppe (6) von Stiftelementen (5) bilden, welche in einer kämmenden Bewegung relativ zueinander bewegt werden können.

7. Verfahren nach einem der Ansprüche 5 oder 6,
**dadurch gekennzeichnet,**
**dass** das auf den Abnahmestiften (13) des Abnahmewerkzeugs aufgespannte Gelege mittels der Membran (12) gespannt gehalten wird.

8. Verfahren nach mindestens einem der Ansprüche 5 bis 7,
**dadurch gekennzeichnet,**
**dass** das Roving (2) beim oder nach dem Auflegen des Geleges auf das Pressenunterteil (14) von den Abnahmestiften (13) abgeschnitten wird.

9. Verfahren nach mindestens einem der Ansprüche 1 bis 8,
**dadurch gekennzeichnet,**
**dass** das Gelege durch Aufspannen mindestens eines Rovings (2) auf eine Anzahl von relativ zueinander beweglichen Stiftelementen (5) gelegt wird, und dass ein Abnahmewerkzeug mit Abnahmestiften (13) verwendet wird, wobei die Abnahmestifte (13) als bewegliche Stiftelemente (5) zum Legen des Geleges verwendet werden.

10. Abnahmewerkzeug zur Durchführung des Verfahrens nach mindestens einem der Ansprüche 1 bis 8,
**dadurch gekennzeichnet,**
**dass** es eine elastische Membran (12) zum Ablegen des Geleges auf dem Pressenunterteil (14) aufweist.

11. Abnahmewerkzeug nach Anspruch 10,
**dadurch gekennzeichnet,**
**dass** ein Druckraum (11) vorgesehen ist, der wenigstens zum Teil von der Membran (12) begrenzt ist und in den ein Druckfluid einleitbar ist.

12. Abnahmewerkzeug nach einem der Ansprüche 10 oder 11,
**dadurch gekennzeichnet,**
**dass** eine Anzahl von Abnahmestiften (13) zum Aufspannen des Geleges vorgesehen ist.
